# EUROPÄISCHE PATENTSCHRIFT

(11) **EP 2 856 086 B1**
(45) Veröffentlichungstag und Bekanntmachung des Hinweises auf die Patenterteilung: **10.08.2022**
(21) Anmeldenummer: 13725129.4
(22) Anmeldetag: 21.05.2013
(51) Int. Cl.: G01F 23/284, G01F 23/2962, G01F 23/80

(54) **VERFAHREN ZUR FÜLLSTANDSMESSUNG NACH DEM LAUFZEITPRINZIP**
METHOD FOR MEASURING FILL-LEVEL IN ACCORDANCE WITH THE TRAVEL TIME PRINCIPLE
PROCÉDÉ DE MESURE DE NIVEAU DE REMPLISSAGE D'APRÈS LE PRINCIPE DU TEMPS DE VOL

(30) Priorität: 05.06.2012 DE 102012104858
(43) Veröffentlichungstag der Anmeldung: 08.04.2015
(73) Patentinhaber: Endress+Hauser SE+Co. KG, 79689 Maulburg (DE)
(72) Erfinder: GORENFLO, Stefan, 79688 Hausen (DE); MALINOVSKIY, Alexey, 79689 Maulburg (DE); PANKRATZ, Klaus, 79400 Kandern (DE)
(74) Vertreter: Andres, Angelika Maria
(86) Internationale Anmeldenummer: PCT/EP2013/060417
(87) Internationale Veröffentlichungsnummer: WO 2013/182418

(56) Entgegenhaltungen:
- EP-A1- 1 918 735
- EP-A1- 1 936 403
- DE-A1- 10 105 652
- GB-A- 2 338 132
- US-A- 5 587 969
- US-A1- 2010 162 811
- US-B1- 6 345 683

## Beschreibung

Die Erfindung betrifft ein Verfahren zur Messung eines Füllstands eines in einem Behälter befindlichen Füllguts mit einem nach dem Laufzeitprinzip arbeitenden Füllstandsmessgerät, bei dem mittels einer Sende- und Empfangseinheit Sendesignale in den Behälter gesendet und deren an Reflektoren im Behälter zur Sende- und Empfangseinrichtung zurück reflektierten Anteile nach einer von deren auf diesem Weg zurückgelegten Wegstrecke abhängigen Laufzeit als Empfangssignale empfangen werden, anhand der Empfangssignale Echofunktionen abgeleitet werden, die die Amplituden der Empfangssignale als Funktion einer der zugehörigen Laufzeit entsprechenden Position wiedergeben, und in den Echofunktionen jeweils enthaltene anhand vorgegebener Echoerkennungsverfahren identifizierbare Nutzechos vorgegebener Nutzechotypen ermittelt werden, wobei jedes Nutzecho ein lokales Maximum der Echofunktion ist, dass auf eine Reflektion an einem seinem Nutzechotyp zugeordneten Reflektor, insb. einer Füllgutoberfläche, einem Behälterboden oder einem im Behälter befindlichen Störer, zurückzuführen ist.

Nach dem Laufzeitprinzip arbeitende Füllstandsmessgeräte werden in einer Vielzahl von Industriezweigen eingesetzt, z.B. in der verarbeitenden Industrie, in der Chemie oder in der Lebensmittelindustrie.

Typischer Weise wird das Füllstandsmessgerät oberhalb des Behälters montiert. Im Messbetrieb wird vom Füllstandsmessgerät in jedem Messzyklus ein Sendesignal, z.B. ein Mikrowellensignal, in Richtung des Füllguts in den Behälter gesendet und dessen im Behälter zum Füllstandsmessgerät zurück reflektierten Anteile nach einer von deren im Behälter zurückgelegten Wegstrecke abhängigen Laufzeit als Empfangssignal wieder empfangen. Anhand der Empfangssignale werden Echofunktionen abgleitet, die die Amplituden der Empfangssignale als Funktion einer deren Laufzeit oder deren im Behälter zurückgelegten Wegstrecke entsprechenden Position wiedergeben. Dabei sind Laufzeit und Wegstrecke anhand der Ausbreitungsgeschwindigkeiten der Sende- und Empfangssignale entlang der zurückgelegten Wegstrecke in einander umrechenbar.

Reflektionen an im Behälter befindlichen Reflektoren, wie z.B. der Füllgutoberfläche, einem im Behälter befindlichen Störer und dem Behälterboden, bewirken in den Echofunktionen nachfolgend als Echos bezeichnete lokale Maxima an einer deren Entfernung vom Füllstandsmessgerät entsprechenden Echoposition in der Echofunktion.

Zur Bestimmung der Laufzeiten können alle bekannten Verfahren angewendet werden, die es ermöglichen, verhältnismäßig kurze Entfernungen mittels reflektierter Signale zu messen. Die in Verbindung mit Mikrowellensignalen bekanntesten Beispiele sind das Pulsradar und das Frequenzmodulations-Dauerstrichradar (FMCW-Radar) Verfahren.

Beim Pulsradar werden in jedem Messzyklus periodisch kurze Mikrowellen-Sendeimpulse gesendet, die im Behälter reflektiert und nach einer von der von ihnen zurückgelegten Wegstrecke abhängigen Laufzeit wieder empfangen werden.

Beim FMCW-Verfahren wird in jedem Messzyklus kontinuierlich ein Mikrowellensignal gesendet, das periodisch linear frequenzmoduliert ist, beispielsweise nach einer Sägezahnfunktion. Die Frequenz des Empfangssignals weist daher gegenüber der Augenblicksfrequenz, die das Sendesignal zum Zeitpunkt des Empfangs hat, eine Frequenzdifferenz auf, die von der Laufzeit des zugehörigen Mikrowellensignals abhängt. Die Frequenzdifferenz zwischen Sendesignal und Empfangssignal, die durch Mischung beider Signale und Auswertung des Fourierspektrums des Mischsignals gewonnen werden kann, entspricht somit der Laufzeit und damit dem Abstand der reflektierenden Fläche vom Füllstandsmessgerät. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Anschließend werden anhand vorgegebener Echoerkennungsverfahren in den Echofunktionen jeweils enthaltene Nutzechos vorgegebener Nutzechotypen ermittelt. Jedes Nutzecho ist ein an einer zugehörigen Echoposition auftretendes lokales Maximum der Echofunktion, das auf eine Reflektion an einem bestimmten vorgegebenen Reflektor im Behälter, insb. an der Füllgutoberfläche, am Behälterboden oder an einem im Behälter befindlichen Störer, zurückzuführen ist. Nutzechos werden anhand der zugehörigen bestimmten Reflektoren in Nutzechotypen unterschieden. Das für die Füllstandsmessung wichtigste Nutzecho ist das auf die Reflektion an der Füllgutoberfläche zurückzuführende Füllstandsecho. Weitere für die Füllstandsmessung relevante Nutzechotypen sind auf Reflektionen am Behälterboden zurückzuführende Behälterbodenechos, und auf Reflektionen an vorbekannten Störern zurückzuführende Störechos.

Echoerkennungsverfahren zur Identifizierung von in einer Echofunktion enthaltenen Nutzechos und Verfahren zur Überprüfung der Plausibilität der Zuordnung eines Echos zu einem bestimmten Nutzechotyp sind beispielsweise in der Deutschen Patentanmeldung DE 10 2004 052 110 A1 beschrieben.

Aus der Füllstandsmesstechnik ist eine Vielzahl unterschiedlicher Verfahren bekannt, mit denen anhand von aus mindestens einem Nutzecho abgeleiteten Informationen, insb. deren Echoposition, der Füllstand bestimmt werden kann.

Sofern in der Echofunktion ein Füllstandsecho bestimmt werden kann, wird der Füllstand regelmäßig anhand der Echoposition dieses Füllstandsechos bestimmt. Die Echoposition entspricht der Laufzeit, die das Sendesignal für den Weg von der Sende- und Empfangseinrichtung zur Füllgutoberfläche und zurück benötigt. Aus dieser Laufzeit ergibt sich bei einer bekannten Ausbreitungsgeschwindigkeit der Sendesignale unmittelbar der Abstand zwischen der Füllgutoberfläche und der Sende- und Empfangseinrichtung, die dann anhand einer Einbauhöhe der Sende- und Empfangseinrichtung unmittelbar in den zugehörigen Füllstand umgerechnet werden kann.

In Fällen in denen kein Füllstandsecho bestimmt werden konnte, oder die Klassifizierung eines hierfür in Frage kommenden Echos als Füllstandsecho wenig plausibel erscheint, werden häufig alternative Verfahren zur Füllstandsbestimmung eingesetzt, bei denen auf Zusatzinformationen zurückgegriffen, die aus Nutzechos anderen Nutzechotyps abgeleitet werden.

So kann der Füllstand beispielsweise anhand der Ausbreitungsgeschwindigkeit der Signale im Füllgut und der Echoposition des Behälterbodenechos bestimmt werden. Liegt der Füllstand oberhalb der Einbauhöhe eines Störers, so kann er darüber hinaus anhand der Ausbreitungsgeschwindigkeit der Signale im Füllgut und der Echoposition des zugehörigen Störechos bestimmt werden.

Ebenso kann ein in der Echofunktion enthaltenes aber nicht ohne weiteres als solches identifizierbares Füllstandsecho anhand von Zusatzinformationen ermittelt werden, die aus den Nutzechos anderen Nutzechotyps abgleitet werden. So kann beispielsweise anhand der Echoposition eines in der Echofunktion identifizierten Behälterbodenechos die Echoposition des Füllstandsechos berechnet, und dasjenige lokale Maximum der Echofunktion nachträglich als Füllstandsecho identifiziert werden, dessen Echoposition der aus der Echoposition des Behälterbodenechos berechneten Füllstands-Echoposition am nächsten kommt.

Darüber hinaus sind Verfahren bekannt, bei denen anhand von zuvor aufgezeichneten Echofunktionen eine zeitliche Entwicklungen der Echoposition der Nutzechos des jeweiligen Nutzechotyps bestimmt wird, und hieraus die aktuelle Echoposition des jeweiligen Nutzechos extrapoliert wird.

Aus der US 6 345 683 B1 ist ein Verfahren zur Messung eines Füllstandes bekannt, wobei für jedes Nutzecho eine Echoqualität bestimmt wird und der Füllstand unter Berücksichtigung der Echoqualitäten der Nutzechos bestimmt wird. Die Echoqualitäten leiten sich lediglich aus den Peak-Formen der Empfangssignale ab.

Bei allen diesen Verfahren besteht das Problem, dass aus den Nutzechos abgeleitete Informationen nicht immer gleichermaßen zuverlässig sind.

Eine häufig auftretende Ursache hierfür sind im Behälter auftretende, in der Regel nicht berechenbare bzw. vorhersagbare, Signalinterferenzen, bei denen sich die reflektierten Signalanteile untereinander oder mit dem Sendesignal im Behälter konstruktiv oder destruktiv überlagern. Dies kann zu einer Zerklüftung der Echofunktion im Bereich des Nutzechos führen, bei der in unmittelbarer Nähe des als Nutzecho identifizierten lokalen Maximums weitere lokale Maxima vergleichbarer Amplitude auftreten. Aufgrund von destruktiven Interferenzen kann hier sogar der Fall eintreten, dass die Echofunktion an der Sollposition, an der das Nutzecho eigentlich aufgrund der Entfernung des zugehörigen Reflektors von der Sende- und Empfangseinrichtung auftreten müsste, ein lokales Minimum aufweist. Das kann dazu führen, dass fälschlicher Weise ein zu dieser Sollposition unmittelbar benachbartes lokales Maximum der Echofunktion als Nutzecho bestimmt wird. Eine solche Fehlbestimmung bleibt häufig unbemerkt, und kann in der Regel auch nicht anhand von Plausibilitätskontrollen, auch unter zu Hilfenahme von aus weiteren Nutzechos abgeleiteten Informationen, entdeckt werden. Dementsprechend kann die Verwendung dieser Nutzechos bzw. daraus abgeleiteter Informationen, wie z.B. deren Echoposition, zu einer Verschlechterung der Messgenauigkeit der Füllstandsmessung führen.

Es ist eine Aufgabe der Erfindung ein Verfahren zur Messung eines Füllstandes eines Füllgutes in einem Behälter mit einem nach dem Laufzeitprinzip arbeitenden Füllstandsmessgerät anzugeben, mit dem eine zuverlässig genaue Füllstandsbestimmung ausführbar ist.

Hierzu umfasst die Erfindung ein Verfahren zur Messung eines Füllstandes gemäβ Anspruch 1.

Gemäß einer bevorzugten Ausgestaltung der Erfindung wird der Füllstand ausschließlich anhand von Nutzechos bestimmt, deren Echoqualität ein vorgegebenes Mindestmaß überschreitet.

Gemäß einer bevorzugten Ausgestaltung der Erfindung werden
- anhand der Echoqualitäten der Nutzechos diejenigen Nutzechos bestimmt, aus denen aufgrund ihrer Echoqualität zuverlässige Informationen abgeleitet werden können, und
- zur Bestimmung des Füllstands ausschließlich zuverlässige Informationen herangezogen. Gemäß einer Weiterbildung wird immer dann, wenn anhand der in einer der Echofunktionen identifizierten Nutzechos unterschiedliche Verfahren zur Füllstandsbestimmung ausführbar sind, anhand der Echoqualitäten dieser Nutzechos dasjenige Verfahren ausgewählt und angewendet, bei dem die dafür benötigten Nutzechos die höchsten Qualitäten aufweisen.

Gemäß einer weiteren Weiterbildung werden die Echoqualitäten der Nutzechos zusätzlich anhand
- einer Breite des Nutzechos, insb. einer Breite, die gleich einer Differenz zwischen denjenigen beiden Positionen ist, bei denen die Amplitude der Echofunktion ausgehend von der Echoposition des Maximums zu beiden Seiten auf einen vorgegebenen Wert, insb. einen in Abhängigkeit von der maximalen Amplitude des Nutzechos vorgegebenen Wert, abgesunken ist,
- von Abständen der Echoposition des jeweiligen Nutzechos zu den Positionen von dazu unmittelbar benachbarten lokalen Maxima der Echofunktion,
- einer Amplitude des Maximums des jeweiligen Nutzechos im Verhältnis zu dessen Breite,
- der Verhältnisse der Amplitude des Maximums des jeweiligen Nutzechos zu den Amplituden der dazu unmittelbar benachbarten lokalen Maxima der Echofunktion, und/oder
- der Verhältnisse der Amplitude des Maximums des jeweiligen Nutzechos zu den Amplituden unmittelbar dazu benachbarter lokaler Minima der Echofunktion bestimmt.

Gemäß einer Ausgestaltung der letztgenannten Weiterbildung werden für Nutzechos unterschiedlichen Nutzechotyps unterschiedliche Qualitätskriterien zur Bestimmung von deren Echoqualität angewendet.

Eine weitere Weiterbildung umfasst ein Verfahren, bei dem
- eine zeitliche Entwicklung der Echoposition von Nutzechos mindestens eines Nutzechotyps aufgezeichnet wird, indem
   -- in nacheinander aufgezeichneten Echofunktionen die Echopositionen derjenigen Nutzechos dieses Nutzechotyps bestimmt werden, die ein Mindestmaß an Echoqualität aufweisen, und
   -- die Echopositionen dieser Nutzechos jeweils zusammen mit dem Zeitpunkt der Aufzeichnung der zugehörigen Echofunktion aufgezeichnet werden,
- anhand der zeitlichen Entwicklung der Echoposition der Nutzechos dieses Nutzechotyps eine in der aktuellen Echofunktion zu erwartende Echoposition des Nutzechos dieses Nutzechotyps extrapoliert wird, und
- diese extrapolierte Echoposition, insb.
   -- als Ersatz für die Echoposition des jeweiligen Nutzechos in der aktuellen Echofunktion,
   -- zur Identifizierung des Nutzechos des jeweiligen Nutzechotyps in der aktuellen Echofunktion, und/oder
   -- zur Füllstandsbestimmung,
zur Verfügung gestellt wird.

Eine Weiterbildung des letztgenannten Verfahrens umfasst ein Verfahren, bei dem
- anhand der Echoqualitäten der zur Echoverfolgung eines bestimmten Nutzechotyps verwendeten Nutzechos, der zeitlichen Abstände zwischen deren Aufzeichnung und einer im Behälter maximal auftretenden Füllstandsänderungsgeschwindigkeit eine Genauigkeit der jeweiligen mittels Echoverfolgung extrapolierten Echoposition abgeschätzt wird, und
- die mittels Echoverfolgung extrapolierten Echopositionen unter Berücksichtigung von deren Genauigkeit verwendet werden.

Gemäß einer bevorzugten Ausgestaltung der Erfindung wird ein Verfahren eingesetzt, bei dem
- zur Füllstandsbestimmung ein hinsichtlich der damit erzielbaren Genauigkeit der Füllstandsbestimmung hochrangiges Grundverfahren, insb. ein Grundverfahren bei dem der Füllstand anhand der Echoposition des Füllstandsechos bestimmt wird, verwendet wird, und
- das Grundverfahren bedarfsabhängig durch ein Zusatzverfahren ergänzt wird, mit dem im Grundverfahren benötigte Informationen, insb. Informationen, die aufgrund von in der Echofunktion nicht identifizierbaren Nutzechos nicht unmittelbar zur Verfügung stehen oder aufgrund der schlechten Echosqualität des Nutzechos, aus dem sie ableitbar wären, nicht verwendet werden sollten, bestimmt werden.

Eine Weiterbildung des letztgenannten Verfahrens umfasst ein Verfahren, bei dem
- das Grundverfahren ein Verfahren ist, bei dem der Füllstand anhand der Echoposition des Füllstandsechos bestimmt wird,
- zur Ermittlung der Echoposition des Füllstandsechos mindestens ein Zusatzverfahren zur Verfügung steht, und
- nur dann eines der zur Verfügung stehenden Zusatzverfahren ausgeführt wird, wenn die hierfür benötigten Nutzechos in der Echofunktion identifiziert werden konnten und eine Mindestqualität aufweisen.

Eine bevorzugte Ausgestaltung des letztgenannten Verfahrens umfasst ein Verfahren, bei dem ein zur Verfügung stehendes Zusatzverfahren
- einen ersten Verfahrensschritt umfasst, in dem ein Echopositionsbereich bestimmt wird, in dem das Füllstandsecho in der aktuellen Echofunktion zu erwarten ist, und
- einen zweiten Verfahrensschritt umfasst, in dem ein Echoerkennungsverfahren zur Identifizierung des Füllstandsechos in diesem Echopositionsbereich der aktuellen Echofunktion ausgeführt wird.

Hierbei wird der Echopositionsbereich im ersten Verfahrensschritt vorzugsweise
- anhand der Echoposition des Störechos,
- anhand der Echoposition des Behälterbodenechos, oder
- anhand einer aus den Echopositionen der Füllstandsechos zuvor aufgezeichneter Echofunktionen abgeleiteten zeitlichen Entwicklung der Echoposition der Füllstandsechos abgeleitet.

Gemäß einer weiteren Weiterbildung der Erfindung werden die Echoqualitäten der Nutzechos bei einer Überprüfung und/oder einer Plausibilitätskontrolle eines End- oder Zwischenergebnisses der Füllstandsbestimmung berücksichtigt.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.
- Fig. 1 zeigt: eine Anordnung zur Füllstandsmessung mit einem nach dem Laufzeitprinzip arbeitenden Füllstandsmessgerät;
- Fig. 2a zeigt: eine mit der in Fig. 1 dargestellten Anordnung bei einem deutlich oberhalb des Rührwerks liegenden Füllstand aufgenommene Echofunktion;
- Fig. 2b zeigt: eine mit der in Fig. 1 dargestellten Anordnung bei einem im Bereich des Rührwerks liegenden Füllstand aufgenommene Echofunktion; und
- Fig. 3 zeigt: rechts ein peakförmiges isoliert auftretendes Echo und links ein zerklüftetes Echo.

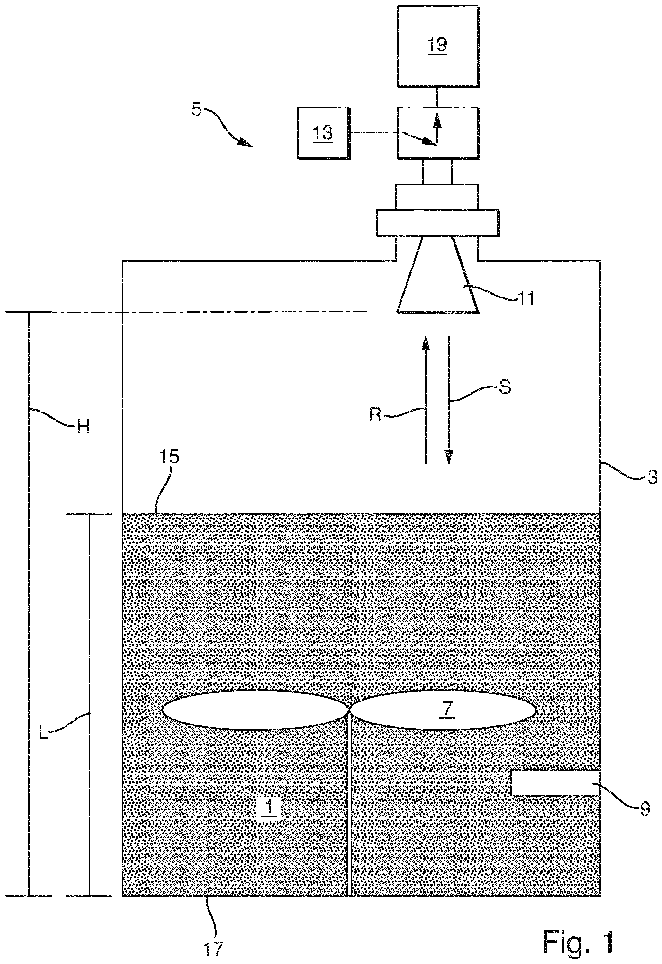

Fig. 1 zeigt eine Anordnung zur Füllstandsmessung. Sie umfasst einen mit einem Füllgut 1 gefüllten Behälter 3, auf dem ein nach dem Laufzeitprinzip arbeitendes Füllstandsmessgerät 5 angeordnet ist. Das Füllstandsmessgerät 5 dient dazu, einen Füllstand L des Füllguts 1 im Behälter 3 zu messen. Als Füllstandsmessgerät 5 eignen sich z.B. die eingangs beschriebenen Pulsradar oder FMCW Füllstandsmessgeräte. In dem Behälter 3 ist exemplarisch ein Rührwerk 7 und ein Störer 9 eingezeichnet. Störer 9 sind z.B. feste Einbauten im Behälter 3 an denen Reflektionen auftreten können. Das hier nur ein einziger Störer 9 vorgesehen ist dient dem leichteren Verständnis und der Übersichtlichkeit. Selbstverständlich können in realen Messsituationen sehr viel mehr Störer vorhanden sein.

Das Füllstandsmessgerät 5 weist eine Sende- und Empfangseinheit 11, auf, die in jedem Messzyklus ein mittels eines Sendesignalgenerators 13 erzeugtes Sendesignale S in den Behälter 3 sendet, und dessen an Reflektoren im Behälter 3 zur Sende- und Empfangseinheit 11 zurück reflektierten Anteile nach einer von deren im Behälter 3 zurückgelegten Wegstrecke abhängigen Laufzeit als Empfangssignale R empfängt.

In dem dargestellten Ausführungsbeispiel ist die Sende- und Empfangseinheit 11 eine Antenne, die sowohl sendet als auch empfängt. Alternativ könnte eine Sendeantenne und eine davon getrennte Empfangsantenne eingesetzt werden.

Zu den im Behälter 3 befindlichen Reflektoren zählt eine Füllgutoberfläche 15. Zusätzlich können in Abhängigkeit vom Füllstand L und einer Dielektrizitätskonstanten des Füllguts 1 Reflektionen an weiteren Reflektoren, insb. am Störer 9 und am Boden 17 des Behälters 3 auftreten. Die Überlagerung aller zur Sende- und Empfangseinheit 11 zurück reflektierten Signalanteile bildet das Empfangssignal R.

Das jeweils während der Dauer eines Messzyklusses empfangene Empfangssignal R wird einer Signalverarbeitung 19 zugeführt, die anhand des Empfangssignals R eine Echofunktion A(t) ableitet, die die Amplituden A des Empfangssignals R als Funktion einer der zugehörigen Laufzeit entsprechenden Position t in der Echofunktion A(t) wiedergibt. Entsprechende Verfahren sind hinlänglich bekannt, und daher hier nicht im Detail beschrieben.

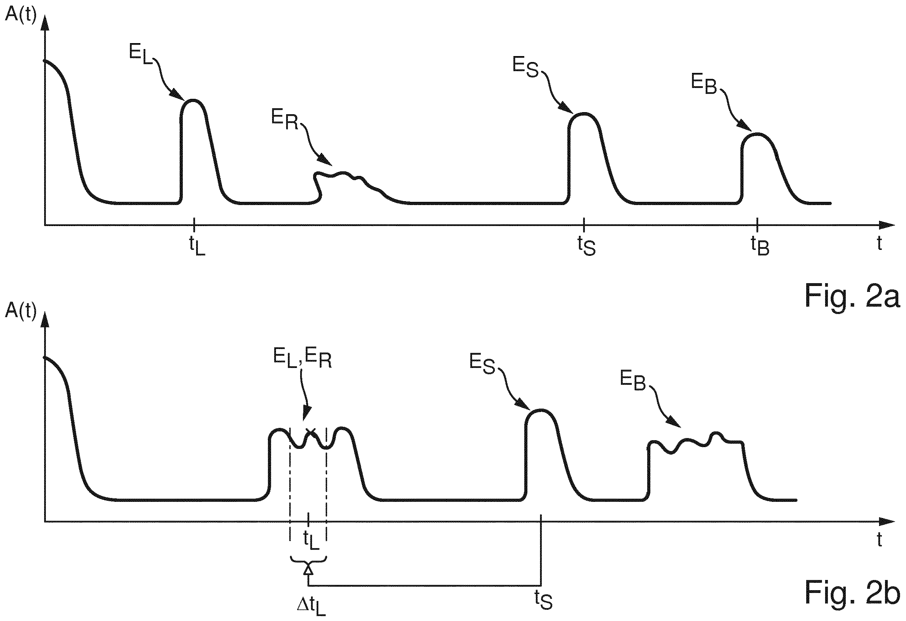

Fig. 2a zeigt eine mit der in Fig. 1 dargestellten Anordnung bei einem deutlich oberhalb des Rührwerks 7 befindlichen Füllstand L abgeleitete Echofunktion A(t). Fig. 2b zeigt eine mit der in Fig. 1 dargestellten Anordnung bei einem im Bereich des Rührwerks 7 befindlichen Füllstand L abgeleitete Echofunktion A(t).

Nach der Ableitung der Echofunktion A(t) werden anhand vorgegebener Echoerkennungsverfahren jeweils darin enthaltene mittels des Verfahrens identifizierbare Nutzechos E vorgegebener Nutzechotypen ermittelt. Jedes Nutzecho ist ein an einer zugehörigen Echopositionen t auftretendes lokales Maximum, dass auf eine Reflektion an einem seinem Nutzechotyp zugeordneten bestimmten Reflektor zurückzuführen ist. Die Nutzechotypen umfassen Füllstandsechos E_{L}, Behälterbodenechos E_{B} und Störechos E_{ST}. Einen weiteren Nutzechotyp bilden einem bestimmten Reflektor zugeordnete - hier nicht dargestellte- Mehrfachechos. Sie entstehen durch Mehrfachreflektionen an dem zugeordneten Reflektor. Ein Mehrfachecho entspricht somit einem Signalanteil des Sendesignals S, der zweimal oder mehrmals zwischen der Sende- und Empfangseinheit 11 oder einem Behälterdeckel und dem zugehörigen Reflektor hin- und her reflektiert wird, bevor er von der Sende- und Empfangseinheit 11 empfangen wird. Die relevanteste Gruppe bilden dabei auf zwei- oder mehrmalige Reflektion an der Füllgutoberfläche 17 zurückzuführende Mehrfachechos.

Dabei hängt es von der jeweils während des Messzyklusses vorliegenden Messsituation ab, ob die Nutzechos E der einzelnen Nutzechotypen in der Echofunktion A(t) enthalten sind, und ob enthaltene Nutzechos E mittels der eingesetzten Echoerkennungsverfahren als Nutzechos E eines der vorgegebenen Nutzechotypen identifiziert werden können. Maßgeblich hierfür sind insb. der tatsächlich im Behälter 3 vorliegende Füllstand L und die Transmissions- und Reflektionseigenschaften des Füllguts 1.

Echoerkennungsverfahren zur Bestimmung von Nutzechos vorgegebener Nutzechotypen sind aus dem Stand der Technik bekannt und z.B. in der eingangs genannten DE 10 2004 052 110 A1 beschrieben. Dabei werden für jeden Nutzechotyp Echoerkennungskriterien vorgegeben, anhand derer in der jeweiligen Echofunktion A(t) enthaltene Nutzechos der einzelnen Nutzechotypen identifiziert werden.

So kann beispielsweise das die größte Amplitude aufweisende Echo oder das erste eintreffende Echo als Füllstandsecho E_{L} identifiziert werden. Es ist möglich, diese beiden Kriterien miteinander zu kombinieren, indem z.B. ein so genannter Erstechofaktor definiert wird. Der Erstechofaktor ist ein vorgegebener Faktor, um den ein Echo eine bestimmte Amplitude übersteigen muss, um als Füllstandsecho erkannt zu werden.

Ein weiteres Verfahren ist in der am 20.12.2002 angemeldeten Deutschen Patentanmeldung DE-A 10260962 beschrieben. Dort werden die einzelnen Nutzechotypen anhand von zuvor abgespeicherten Daten ermittelt werden. Die Daten enthalten eine Tabelle, in der aus Empfangssignalen R vorangegangener Messzyklen abgeleitete Echofunktionen A(t) abgelegt sind. Die Echofunktionen A(t) sind derart in der Tabelle abgelegt, dass jede Spalte zur Aufnahme jeweils einer Echofunktion A(t) dient. Die Echofunktionen A(t) sind in den Spalten in einer Reihenfolge abgelegt, die den den jeweiligen Echofunktionen A(t) zugehörigen Füllständen L entspricht. Im Betrieb wird die Echofunktion A(t) des aktuell aufgenommenen Empfangssignals R gebildet und diejenige Echofunktion A(t) der Tabelle ermittelt, die die größte Übereinstimmung zu der aktuellen Echofunktion A(t) aufweist. Aus dem Spaltenindex dieser Echofunktion A(t) ergibt sich unmittelbar die Echoposition t_{L} des Füllstandsechos E_{L}. Darüber hinaus sind in der Tabelle Höhenlinien erkennbar sind, die die Abhängigkeit der Echopositionen t_{E} der Nutzechos E der einzelnen Nutzechotypen in Abhängigkeit vom Füllstand L wiedergeben. Jede Höhenlinien ist dabei einem bestimmten Nutzechotyp zugeordnet. Befindet sich also ein Echo der aktuellen Echofunktion A(t) auf einer solchen Höhenlinie wird es entsprechend als Nutzecho E des zugehörigen Nutzechotyps identifiziert.

Zur Erkennung von Behälterboden- und Störechos E_{B}, E_{ST} werden regelmäßig die Transmissionseigenschaft des Füllguts 1, die Ausbreitungsgeschwindigkeit der Signale im Füllgut 1, sowie die Einbauhöhe des Störers 9 bzw. die Einbauhöhe H der Sende- und Empfangseinrichtung 11 über dem Boden 17 herangezogen.

Bei einem für das Sendesignal S undurchlässigen Füllgut 1 weisen das Störecho E_{ST} und das Behälterbodenecho E_{B} jeweils eine charakteristische Echoposition t_{ST}, t_{B} auf, die sich aus deren Entfernung vom Sende- und Empfangselement 11 ergibt.

Ist das Füllgut 1 für das Sendesignal S durchlässig, so lassen sich für die Echopositionen t_{ST}, t_{B} der Störechos ST und der Behälterbodenechos B Ober- und Untergrenzen angeben. Die Obergrenzen entsprechen einer Signallaufzeit zum Störer 9 bzw. zum Boden 17 und zurück bei vollem Behälter 3. Die Untergrenzen entsprechen einer Signallaufzeit zum Störer 9 bzw. zum Boden 17 und zurück bei leerem Behälter 3. Beide Nutzechotypen können nur in dem durch die Ober- und Untergrenze eingeschränkten Echopositionsbereich auftreten.

Entsprechend kann als Störecho E_{ST} bzw. als Behälterbodenecho E_{B} - genau wie bei der Füllstandsechoerkennung - beispielweise das erste Echo bzw. das Echo mit der größten Amplitude identifiziert werden, dass innerhalb des jeweiligen eingeschränkten Echopositionsbereichs liegt.

Auf einen bestimmten Reflektor zurückzuführende Mehrfachechos werden regelmäßig anhand ihrer Echoposition identifiziert. Dabei muss die Echoposition eines Echos einem ganzzahligen Vielfachen der Echoposition, des auf eine einmalige Reflektion an dem jeweiligen Reflektor zurückzuführenden Nutzechos E entsprechen, um als auf diesen Reflektor zurückzuführendes Mehrfachecho identifiziert zu werden. Darüber hinaus ist eine Änderungsgeschwindigkeit, mit der ein Mehrfachecho seine Echoposition ändert zwangsläufig gleich einem ganzzahligen Vielfachen der Änderungsgeschwindigkeit, mit der sich die Echoposition, des auf die einmalige Reflektion an dem jeweiligen Reflektor zurückzuführende Nutzechos E verändert. Entsprechend können diese Änderungsgeschwindigkeiten anhand der aktuellen und der in mindestens einem vorangegangenen Messzyklus ermittelten Echopositionen t_{E} der jeweiligen Echos E bestimmt und zur Identifizierung von Mehrfachechos herangezogen werden.

Bei allen diesen Echoerkennungsverfahren kann zusätzlich eine vorzugsweise echopositionsabhängig vordefinierte Mindestamplitude vorgegeben werden, die die Amplitude eines Echos übersteigen muss, um als Nutzecho E erkannt zu werden.

Darüber hinaus können die Nutzechos E der einzelnen Nutzechotypen identifiziert werden, indem anhand dessen zuletzt in einem vorangegangenen Messzyklus ermittelten Echoposition t_{E} und einer Änderungsgeschwindigkeit der Echoposition t_{E} dieses Nutzechotyps ein eingeschränkter Echopositionsbereich bestimmt wird, in dem sich das Nutzecho E dieses Nutzechotyps in der aktuellen Echofunktion A(t) befinden muss. Die Änderungsgeschwindigkeit kann anhand einer maximal in dem jeweiligen Behälter 3 möglichen Füllstandsänderungsgeschwindigkeit abgeschätzt werden. Alternativ kann sie anhand der in vorangegangenen Messzyklen ermittelten Echopositionen t_{E} der Nutzechos E dieses Nutzechotyps abgeleitet werden. Entsprechend kann auch hier wieder das erste Echo bzw. das Echo mit der größten Amplitude, dass innerhalb des jeweiligen eingeschränkten entsprechenden Echopositionsbereichs liegt, als das gesuchte Nutzecho E identifiziert werden. Erfindungsgemäß wird in einem nächsten Schritt für jedes in der Echofunktion A(t) ermittelte Nutzecho E dessen Echoqualität Q_{E} bestimmt. Dabei ist die Echoqualität Q_{E} eines Nutzechos E umso höher, je peakförmiger die Echofunktion A(t) im Bereich des jeweiligen Nutzechos E ausgebildet ist, und je isolierter von anderen lokalen Maxima das jeweilige Nutzecho E in der Echofunktion A(t) auftritt.

Die Echoqualität Q_{E} der Nutzechos E wird anhand von mindestens einem aus der Echofunktion A(t) ableitbaren Qualitätsindikator ermittelt.

Erfindungsgemäß ist der mindestens eine Qualitätsindikatori eine unter der Echofunktion A(t) in einem um das Maximum des Nutzechos E definierten Fenster F eingeschlossene Fläche.

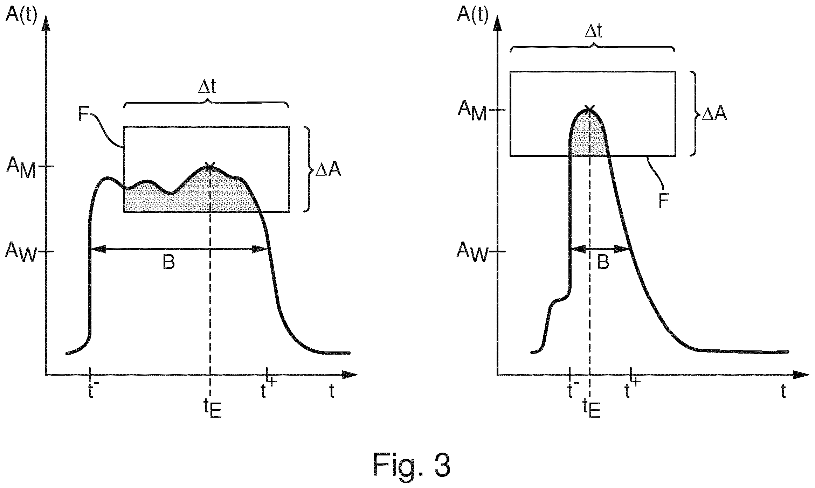

Fig. 3 zeigt hierzu im Vergleich zwei Nutzechos, von denen das rechte peakförmig ausgebildet ist und isoliert auftritt, während das linke ein stark verbreitertes zerklüftetes Nutzecho E ist. In beiden Fällen ist jeweils ein Fenster F vorgegebener Positionsbreite Δt und Amplitudenhöhe ΔA eingezeichnet, dessen Mittelpunkt mit dem durch die maximale Amplitude A_{M} und die zugehörige Echoposition t_{E} des Nutzechos E definierten Punkt der Echofunktion A(t) zusammenfällt. Die jeweils im Fenster F unter der Echofunktion A(t) eingeschlossene Fläche ist grau hinterlegt. Dem Nutzecho E wird folglich eine umso größere Echoqualität Q_{E} zugeschrieben, je kleiner die drunter eingeschlossene Fläche ist.

Zur quantitativen Bestimmung der Echoqualität Q_{E} des Nutzechos E kann ein Verhältnis der eingeschlossene Fläche zu einer Referenzfläche berechnet werden. Als Referenzfläche eignet sich z.B. der Flächeninhalt des Fenster F oder eine im Fenster F unter einem ideal geformten Nutzecho eingeschlossene Fläche.

Bei der Signalausbreitung im Behälter 3 tritt regelmäßig Dispersion auf. Das führt dazu, dass Echos, die auf Reflektionen an weiter entfernten Reflektoren zurückzuführen sind, eine größere Breite aufweisen, als solche, die auf Reflektionen in geringerer Entfernung von der Sende- und Empfangseinrichtung 11 zurückführen sind. Diese von der Entfernung des Reflektors zur Sende- und Empfangseinrichtung 11 abhängige dispersionsbedingte Echoverbreiterung wird bei der Qualitätsbestimmung erfindungsgemäß berücksichtigt, indem die Positionsbreite Δt des Fensters F in Abhängigkeit von der Position t_{E} der Fenstermitte vorgegeben wird.

Alternativ und nicht beansprucht kann eine konstante Fenstergröße vorgegeben werden, und die Echoqualität Q anhand der unter der Echofunktion A(t) eingeschlossenen Fläche im Verhältnis zu einer in Abhängigkeit von der Position t_{E} der Fenstermitte vorgegebenen Referenzfläche bestimmt werden.

Dieser Qualitätsindikator ist bereits für sich alleine genommen geeignet, die Echoqualität Q zu bestimmen.

Zusätzlich hierzu können weitere Qualitätsindikatoren bestimmt werden. Ein solcher weiterer Qualitätsindikator ist beispielsweise eine Breite B des Nutzechos E. Sie wird vorzugsweise derart bestimmt, dass ausgehend von der Echoposition t_{E} des Maximums zu beiden Seiten des Maximums jeweils diejenige Position t⁺, t⁻ bestimmt wird, bei der die Amplitude A der Echofunktion A(t) auf einen vorzugsweise in Abhängigkeit von der maximalen Amplitude A_{M} des Nutzechos E vorgegebenen Wert A_{W} abgesunken ist. Als Beispiel sei hier ein Absinken um einen Betrag in der Größenordnung von 10 dB genannt. Die Differenz Δt= t⁺ - t⁻dieser beiden Positionen t⁺, t⁻ entspricht der Breite B. Dabei nimmt die Echoqualität Q_{E} der Nutzechos E mit zunehmender Breite B ab.

Ein weiteres Beispiel hierfür sind die Abstände der Echoposition t_{E} des Nutzechos E zu den Positionen der beiden dazu unmittelbar benachbarten lokalen Maxima der Echofunktion A(t).

Einen weiteren Qualitätsindikator bildet die Amplitude A_{M} des Maximums des Nutzechos E im Verhältnis zu dessen Breite B. Auch hierbei kann die dispersionsbedingte Echoverbreiterung berücksichtigt werden, in dem das Verhältnis mit einem von der Echoposition t_{E} des Nutzechos E abhängigen Faktor multipliziert wird.

Darüber hinaus bilden die Verhältnisse der Amplitude A_{M} des Maximums des Nutzechos E zu den Amplituden der beiden rechts und links davon dazu unmittelbar benachbarten lokalen Maxima der Echofunktion A(t) weitere Qualitätsindikatoren.

Ebenso bilden die Verhältnisse der Amplitude A_{M} des Maximums des Nutzechos E zu den Amplituden der rechts und links davon unmittelbar benachbarten lokalen Minima der Echofunktion A(t) weitere Qualitätsindikatoren.

Die Echoqualität Q wird beispielsweise anhand der Summe der im einzelnen herangezogenen Qualitätsindikatoren berechnet, wobei jeder dieser Qualitätsindikatoren vorzugsweise mit einem seine Bedeutung und/oder Aussagekraft für das jeweilige Nutzecho E berücksichtigenden Gewichtungsfaktor in die Summe einbezogen wird.

Dabei können für Nutzechos E unterschiedlichen Nutzechotyps unterschiedliche Qualitätsindikatoren zur Bestimmung von deren Echoqualität Q_{E} angewendet werden.

Im Anschluss an die Qualitätsbestimmung der Nutzechos E wird der Füllstand L unter Berücksichtigung der Qualitäten Q_{E} der hierfür zur Verfügung stehenden Nutzechos E bestimmt.

Dabei werden in jedem Messzyklus vorzugsweise ausschließlich diejenigen zur Verfügung stehenden Nutzechos E zur Füllstandsbestimmung eingesetzt, deren Echoqualität Q_{E} ein vorgegebenes Mindestmaß überschreitet.

Vorzugsweise werden anhand der Echoqualitäten Q_{E} der Nutzechos E, die in der jeweiligen Echofunktion A(t) auftraten und identifiziert werden konnten, diejenigen Nutzechos E bestimmt, aus deren Eigenschaften aufgrund ihrer Echoqualität Q_{E} zuverlässige Informationen abgeleitet werden können, und hierüber sichergestellt, dass zur Füllstandsbestimmung ausschließlich zuverlässige Informationen herangezogen werden.

Grundsätzlich stehen zur Füllstandsbestimmung die unterschiedlichsten aus dem Stand der Technik bekannten Verfahren zur Verfügung. Letztere unterscheiden sich unter anderem durch Art und Anzahl der zur deren Ausführung benötigten Nutzechotypen.

Die einzelnen Verfahren zur Füllstandsbestimmung sind beispielsweise in Form von von der Signalverarbeitung 19 ausführbarer Software im Füllstandsmessgerät 5 hinterlegt.

Nachdem die in der Echofunktion A(t) enthaltenen identifizierbaren Nutzechos E und deren Echoqualitäten Q_{E} bestimmt wurden, können folglich anhand der damit zur Verfügung stehenden Nutzechos E ausreichender Echoqualität Q_{E} diejenigen Verfahren ermittelt werden, die anhand der zur Verfügung stehenden Nutzechotypen ausführbar sind. Kommen hierzu mehrere Verfahren in Frage, wird vorzugsweise dasjenige Verfahren ausgewählt und angewendet wird, bei dem die dafür benötigten zur Verfügung stehenden Nutzechos E die höchsten Echoqualitäten Q_{E} aufweisen.

Darüber hinaus wird vorzugsweise eine Rangordnung der einzelnen Verfahren zur Füllstandsbestimmung festgelegt und bei der Auswahl des anzuwendenden Verfahrens berücksichtigt, in der die einzelnen Verfahren entsprechend der Genauigkeit der damit erzielbaren Füllstandsmessergebnisse einsortiert sind.

So lässt sich der Füllstand L aus der Echoposition t_{L} eines Füllstandsechos E_{L} regelmäßig deutlich genauer bestimmen, als aus der Echoposition t_{B} eines Behälterbodenechos E_{B} vergleichbarer Echoqualität Q. Ein Grund hierfür ist, dass die Signalausbreitung der Sende- und Empfangssignale S, R auf dem Weg von der Sende- und Empfangseinheit 11 zur Füllgutoberfläche 15 regelmäßig deutlich weniger Störeinflüssen und/oder Beeinträchtigungen ausgesetzt ist, als auf dem Weg von der Sende- und Empfangseinheit 11 zum Behälterboden 17. Ein weiterer Grund besteht darin, dass die Echoposition t_{B} des Behälterbodenechos E_{B} von der Ausbreitungsgeschwindigkeit der Signale im Füllgut 1 abhängig ist, die häufig nicht mit hoher Genauigkeit bekannt ist, und darüber hinaus, z.B. aufgrund von indem Behälter 3 ablaufenden Prozessen, Schwankungen unterworfen sein kann. Das gleiche gilt natürlich auch für Verfahren, bei denen der Füllstand L anhand der Echoposition t_{ST} eines Störechos E_{ST} bestimmt wird. Letztere sind die ohnehin nur zur Bestimmung von oberhalb der Einbauhöhe des zugehörigen Störers 9 liegenden Füllständen L einsetzbar.

In dem Bestreben möglichst hochrangige Verfahren zur Füllstandsbestimmung zu verwenden, wird vorzugsweise ein hochrangiges Grundverfahren verwendet, dem bedarfsabhängig Zusatzverfahren hinzugefügt werden. Die Zusatzverfahren dienen dazu, im Grundverfahren benötigte Informationen zu beschaffen, die z.B. aufgrund von in der Echofunktion A(t) nicht identifizierbaren Nutzechos E nicht unmittelbar zur Verfügung stehen, oder aufgrund der schlechten Echoqualität Q des Nutzechos E, aus dem sie abzuleiten wären, nicht verwendet werden sollten.

Ein solches hochrangiges Grundverfahren ist die oben genannte Füllstandsbestimmung anhand der Echoposition t_{L} des Füllstandsechos E_{L}.

Konnte in der aktuellen Echofunktion A(t) ein Füllstandsecho E_{L} ausreichender hoher Qualiät Q_{EL} bestimmt werden, wird der Füllstand L anhand von dessen Echoposition t_{L} bestimmt. Dies ist beispielsweise in der in Fig. 2a dargestellten Echofunktion A(t) der Fall. Der Füllstand L liegt hier deutlich oberhalb des Rührwerks 7. Das zugehörige Füllstandsecho E_{L} ist in der dargestellten Echofunktion A(t) zweifelsfrei anhand seiner Echoposition t_{L} als erstes und darüber hinaus auch die höchste Amplitude A aufweisendes Echo identifizierbar und weist eine hohe Echoqualität Q_{EL} auf.

Anders liegt der Fall dagegen in der in Fig. 2b dargestellten Echofunktion A(t). Dort befindet sich der zu messende Füllstand L im Bereich des Rührwerks 9. Im zugehörigen Positionsbereich der Echofunktion A(t) treten im dargestellten Beispiel drei eng benachbarte lokale Maxima vergleichbarer Amplitude auf. Hier ist es durchaus möglich, dass mittels des Echoerkennungsverfahrens kein Füllstandsecho L bestimmt werden kann. Sollte doch ein Füllstandsecho L identifiziert worden sein, so weist dieses jedoch eine geringe Echoqualität Q auf. In beiden Fällen steht also kein nutzbares Füllstandsecho E_{L} zur Verfügung.

Um dennoch das oben genannte hochrangige Grundverfahren einsetzen zu können, wird die fehlende Information soweit dies möglich ist durch ein geeignetes Zusatzverfahren ermittelt.

Ein solches Zusatzverfahren besteht darin, das Füllstandsecho E_{L} bzw. dessen Echoposition t_{L} anhand des ebenfalls in der Echofunktion A(t) enthaltenen Behälterbodenechos E_{B} zu ermitteln. Da sich der Füllstand L hier oberhalb der Einbauhöhe des Störer 9 befindet, kommt alternativ auch eine Ermittlung anhand des Störechos E_{ST} in Frage. Dabei wird anhand der Echoposition t_{B}, t_{ST} des Behälterbodenechos E_{B} bzw. des Störechos E_{ST} und der Ausbreitungsgeschwindigkeit der Signale im Füllgut 1 ein Echopositionsbereich Δt_{L} berechnet, in dem sich das Füllstandsecho E_{L} befinden muss. Dabei stellt die Füllstandbestimmung anhand des Behälterbodenechos E_{B} bzw. des Störechos E_{ST} ein nierderrangigeres Grundverfahren dar, dass unter Inkaufnahme der damit verbundenen geringeren Messgenauigkeit hier auch für sich allein eingesetzt werden könnte. Bessere Messgenauigkeiten lassen sich erzielen, wenn dieses niederrangige Grundverfahren als Zusatzverfahren eingesetzt wird, mit dem in einem ersten Verfahrensschritt ein Echopositionsbereich Δt_{L} bestimmt wird, in dem das Füllstandsecho E_{L} in der aktuellen Echofunktion A(t) zu erwarten ist. Dabei entspricht die Breite dieses Echopositionsbereichs Δt_{L} der mit dem niederrangigen Grundverfahren verbundenen Messungenauigkeit. In einem zweiten Verfahrensschritt wird das Füllstandsecho E_{L} in diesem gegenüber der Ausgangsituation deutlich eingeschränkten Echopositionsbereich Δt_{L} der Echofunktion A(t) ermittelt. Dabei können in diesem Echopositionsbereich Δt_{L} die gleichen Echoerkennungskriterien angewandt werden, die zuvor auf die gesamte Echofunktion A(t) angewendet wurden. D.h. es wird beispielsweise das erste bzw. das die größte Amplitude aufweisende lokale Maximum innerhalb des Echopositionsbereichs Δt_{L} als Füllstandsecho E_{L} identifiziert. Nachfolgend wird dann anhand der Echoposition t'_{L} des anhand des Zusatzverfahrens bestimmten Füllstandsechos E_{L} der Füllstand L gemäß dem Grundverfahren bestimmt.

Erfindungsgemäß wird auch bei der Auswahl und Anwendung der Zusatzverfahren die Echoqualität Q_{EL} der dafür benötigten Nutzechos E berücksichtigt. In dem in Fig. 2b dargestellten Beispiel weist das Störecho E_{ST} eine hohe Echoqualität Q_{EST} auf, wohingegen das Behälterbodenecho E_{B} stark zerklüftet und somit von sehr niedriger Echoqualität Q_{EB} ist. Aus dem Behälterbodenecho E_{B} sollten daher qualitätsbedingt keine in die Füllstandsbestimmung einfließenden Informationen abgeleitet werden. Demgegenüber ist das Störecho E_{ST} aufgrund seiner hohen Qualität Q_{EST} durchaus geeignet, um hieraus Information für die Füllstandsbestimmung abzuleiten. Entsprechend wird im vorliegenden Beispiel aufgrund der Qualitäten Q_{EST}, Q_{EB} der Nutzechos E das auf dem Störecho E_{ST} basierende Zusatzverfahren ausgewählt und ausgeführt. Wären sowohl das Störecho E_{ST} als auch das Behälterbodenecho E_{B} von schlechter Qualität Q, sollte keines der beiden Zusatzverfahren verwendet werden.

Alternativ kann von einer Anwendung des Grundverfahrens insgesamt abgesehen werden, wenn das dafür benötigte Nutzechos E nicht identifiziert werden konnte oder eine schlechte Qualität Q_{E} aufweist. In dem Fall wird soweit möglich ein anderes Verfahren zur Füllstandsbestimmung eingesetzt, für das die dafür benötigten Nutzechos E identifiziert werden konnten und eine höhere Echoqualität Q_{E} aufweisen. So kann in dem in Fig. 2b dargestellten Beispiel auf die Heranziehung des Füllstandsechos E_{L} insgesamt verzichtet werden und der Füllstand L anhand des dort eine hohe Qualität Q_{ST} aufweisenden Störechos E_{ST} bestimmt werden. Alternativ kann anstelle des Grundverfahrens ein ein nachfolgend im Detail beschriebenes Echoverfolgungsverfahren eingesetzt werden, mit dem eine für das Füllstandsecho E_{L} zu erwartenden Füllstandsechopostion t_{L}' bestimmt wird, anhand derer der Füllstand L dann unmittelbar bestimmt wird.

Echoverfolgungsverfahren können im Rahmen der Füllstandsmessung für einzelne oder alle Nutzechotypen eingesetzt werden. Dabei wird anhand von in vorangegangenen Messzyklen aufgezeichneten Echofunktionen A(t) eine zeitliche Entwicklung der Echopositionen t_{E} der in den Echofunktionen A(t) enthaltenen Nutzechos E des jeweils zu verfolgenden Nutzechotyps ermittelt. Hierzu werden in jedem Messzyklus die Echopositionen t_{E} der entsprechenden in der Echofunktion A(t) identifizierten Nutzechos E zusammen mit dem Zeitpunkt der Aufzeichnung der zugehörigen Echofunktion A(t) aufgezeichnet. Aus der zeitlichen Entwicklung ergibt sich unmittelbar die zuletzt bestimmte Echoposition t_{E} des jeweiligen Nutzechos E und deren Änderungsgeschwindigkeit. Nachfolgend kann anhand der zeitlichen Entwicklung der Echopositionen t_{E} der Nutzechos E des jeweiligen Nutzechotyps eine in der aktuellen Echofunktion A(t) zu erwartende Echoposition T_{E} des Nutzechos E dieses Nutzechotyps extrapoliert werden.

Vorzugsweise wird auch bei der Echoverfolgung die Echoqualität Q der zu deren Ausführung herangezogenen in den jeweiligen Echofunktionen A(t) identifizierten Nutzechos E berücksichtigt. Dies geschieht beispielsweise, indem in den nacheinander aufgezeichneten Echofunktionen A(t) die Echopositionen t_{E} derjenigen Nutzechos E des zu verfolgenden Nutzechotyps bestimmt werden, die ein Mindestmaß an Echoqualität Q aufweisen. Entsprechend werden ausschließlich die Echopositionen t_{E} dieser ein Mindestmaß ein Echoqualität Q aufweisenden Nutzechos E des jeweiligen Nutzechotyps zusammen mit dem Zeitpunkt der Aufzeichnung der zugehörigen Echofunktion A(t) aufgezeichnet, und hieraus die zeitliche Entwicklung des Nutzechos E des jeweiligen Nutzechotyps bestimmt, aus der dann für den jeweiligen Nutzechotyp die in der aktuellen Echofunktion A(t) zu erwartende Echoposition T_{E} des entsprechenden Nutzechos E extrapoliert und zur Verfügung gestellt werden kann.

Darüber hinaus wird vorzugsweise anhand der Echoqualitäten Q_{E} der zur Echoverfolgung eines bestimmten Nutzechotyps verwendeten Nutzechos E, der zeitlichen Abstände zwischen deren Aufzeichnung und einer im Behälter 3 maximal auftretenden Füllstandsänderungsgeschwindigkeit eine Genauigkeit der jeweiligen mittels Echoverfolgung extrapolierten Echoposition T_{E} abgeschätzt. Das bietet den Vorteil, dass die Genauigkeit bei der späteren Verwendung der mittels Echoverfolgung extrapolierten Echoposition T_{E} berücksichtigt werden kann. Auf diese Weise kann unter anderem sichergestellt werden, dass ungenaue extrapolierte Echopositionen T_{E} von der Verwendung ausgeschlossen werden.

Diese Echoverfolgung kann in dem erfindungsgemäßen Füllstandsmessverfahren im Rahmen eines Echoerkennungsverfahren zur Identifizierung von Nutzechos E eingesetzt werden, indem der Positionsbereich, in dem das Echoerkennungsverfahren zur Identifizierung des Nutzechos E des jeweiligen Nutzechotyps ausgeführt wird, auf einen beschränkten Positionsbereich T_{E} +/ΔT um die jeweils zu erwartende Echoposition T_{E} des jeweiligen Nutzechos E beschränkt wird.

Darüber hinaus können mittels Echoverfolgung ermittelte zuwartende Echopositionen T_{E} in den Füllstandsbestimmungsverfahren als Ersatz für die entsprechende Echopositionen t_{E} der Nutzechos E des jeweiligen Nutzechotyps verwendet werden. Das ist beispielsweise dann sinnvoll, wenn das entsprechende Nutzecho E in der aktuellen Echofunktion A(t) nicht identifiziert werden kann, oder von schlechter Echoqualität Q ist. So kann der Füllstand L beispielsweise gemäß dem obigem Grundverfahren bestimmt werden, indem die zu erwartenden Echoposition T_{E} des Füllstandsechos E_{L} anstelle einer aus der aktuellen Echofunktion A(t) abgeleiteten Füllstandsechoposition t_{L} verwendet wird.

Darüber hinaus bildet die Echoverfolgung ein weiteres Zusatzverfahren, das in Verbindung mit dem oben beschriebenen Grundverfahren eingesetzt werden kann. Dabei kann anhand der zu erwartenden Echoposition T_{E} des Füllstandsechos E_{L} der entsprechende Echopositionsbereich T_{EL} +/- ΔT_{L} vorgegeben werden, und nachfolgend das in der aktuellen Echofunktion A(t) enthaltene Füllstandsecho E_{L} in diesem eingeschränkten Echopositionsbereich T_{EL} +/- ΔT_{L} ermittelt werden.

Die Echoqualitäten Q_{E} der Nutzechos E werden vorzugsweise nicht nur bei der Füllstandsbestimmung selbst, sondern auch im Rahmen von gegebenenfalls eingesetzten Überprüfungen von End- oder Zwischenergebnissen der Füllstandsbestimmung berücksichtigt. So sollte ein anhand der Echosposition t_{L} des Füllstandsechos E_{L} bestimmter Füllstand L nicht anhand eines aus der Echoposition E eines qualitativ schlechteren Nutzechos E abgeleiteten Füllstands L auf dessen Richtigkeit überprüft werden. Durch die Berücksichtigung der Echoqualitäten Q_{E} wird z.B. sichergestellt, dass ein anhand der Echosposition t_{L} eines qualitativ hochwertigen Füllstandsechos E_{L} bestimmter Füllstand L nicht fehlerhafter Weise deshalb verworfen wird, weil er außerhalb des aufgrund der Echoposition t_{E} eines qualitativ niederwertigen anderen Nutzechos E, z.B. eines zerklüfteten Behälterbodenechos E_{B}, zu erwartenden Echopositionsbereichs liegt.

Das gleiche gilt analog für Plausibilitätskontrollen von End- oder Zwischenergebnissen der Füllstandsbestimmung. Ein Beispiel hierfür sind Plausibilitätskontrollen anhand von physikalischen Zusammenhängen.

So gilt beipielsweise, dass die Füllstandsechoposition t_{L} bei sinkendem Füllstand L ansteigen und die Behälterbodenechoposition t_{B} absinken muss.

Zur Ausführung einer hierauf basierenden Plausibilitätskontrolle werden beispielsweise die Änderungsgeschwindigkeiten der Füllstandsechopositon t_{L} und der Behälterbodenechoposition E anhand der entsprechenden Echoposition E dieser Nutzechos E in den zuletzt aufgezeichneten Echofunktionen A(t) ermittelt. Weisen die beiden Änderungsgeschwindigkeiten das gleiche Vorzeichen auf, wird ein Widerspruch festgestellt. Würde man hierfür alle identifizierten Nutzechos E zu Verwendung zulassen besteht die Gefahr von Fehlschlüssen. So könnte beispielsweise der Fall eintreten, dass eine bei sinkendem Füllstand L auftretende interferenzbedingte Verbreiterung des Behälterbodenecho E_{B} fälschlicher Weise dazu führt, dass eine positive Änderungsgeschwindigkeit der Behälterbodenechoposition t_{E} festgestellt wird.

Um dies auszuschließen, sollten daher auch zur Ableitung der für die jeweilige Plausibilitätskontrolle benötigten Informationen nur qualitativ hochwertige Nutzechos E herangezogen werden. Hierdurch wird sichergestellt, dass aus möglicher Weise fehlerbehafteten Informationen eine weiteren Schlüsse gezogen werden.

Die Erfindung ist grundsätzlich analog auch in Verbindung mit anderen nach dem Laufzeitprinzip arbeitenden Füllstandsmessgeräten einsetzbar. Ein Beispiel hierfür sind mit Mikrowellen nach dem Laufzeitprinzip arbeitenden Füllstandsmessgeräte, bei denen mittels eines Sendesignalgenerator erzeugte kurze Signalpulse über eine Sende- und Empfangseinrichtung auf einen in den Behälter hinein ragenden Wellenleiter übertragen werden. Dabei werden die Sendesignalpulse entlang des Wellenleiters in den Behälter geführt. Überall dort, wo entlang des Wellenleiters ein Impedanzsprung auftritt, insb. an der Füllgutoberfläche, in der Nähe von in den Behälter eingebauten Störern, und am Wellenleiterende, wird ein Signalanteil des Sendesignalpulses zur Sende- und Empfangseinrichtung zurück reflektiert. Auch hier werden anhand der durch Überlagerung der zur Sende- und Empfangseinrichtung zurück reflektierten Signalanteile gebildeten Empfangssignale Echofunktionen abgeleitet, die die Amplituden der Empfangssignale als Funktion einer der zugehörigen Laufzeit entsprechenden Position wiedergeben. Auch bei diesen Füllstandsmessgeräten wird der Füllstand anhand von in der jeweiligen Echofunktion identifizierbaten Nutzechos vorgegebener Nutzechotypen ermittelt.

Grundsätzlich ist die Erfindung auch in Verbindung mit mit Ultraschall nach dem Laufzeitprinzip arbeitenden Füllstandsmessgeräten einsetzbar. Letztere weisen als Sende- und Empfangseinheit in der Regel einen elektromechanischen Wandler, insb. ein piezoelektrischer Wandler, auf, mit dem periodisch kurze Ultraschallpulse vorgegebener Frequenz erzeugt und gesendet werden, und der darauf auftreffende Ultrasschallsignale in elektrische Empfangssignale umwandelt. Auch diese Füllstandsmessgeräte leiten anhand der Empfangssignale eine die Amplituden der Empfangssignale als Funktion einer der zugehörigen Laufzeit entsprechenden Position wiedergebende Echofunktion ab. Auch hier werden in der Echofunktion enthaltene identifizierbare Nutzechos bestimmt, und der Füllstand anhand dieser Nutzechos bestimmt. Im Unterschied zu Mikrowellensignalen werden Ultraschallsignale regelmäßig nahezu vollständig an der Füllgutoberfläche des Füllguts reflektiert. Entsprechend sind in den Echofunktionen in der Regel nur Füllstandsechos und durch Mehrfachreflektionen an der Füllgutoberfläche entstehende Mehrfachechos enthalten, auf die das erfindungsgemäße Verfahren entsprechend auf die oben beschriebenen Weise anwendbar ist. Behälterbodenechos treten dagegen nur bei leerem Behälter auf.
- 1: Füllgut
- 3: Behälter
- 5: Füllstandsmessgerät
- 7: Rührwerk
- 9: Störer
- 11: Sende- und Empfangseinheit
- 13: Sendesignalgenerator
- 15: Füllgutoberfläche
- 17: Boden
- 19: Signalverarbeitung

## Patentansprüche

1. Verfahren zur Messung eines Füllstandes (L) eines in einem
Behälter (3) befindlichen Füllguts (1), mit einem nach dem Laufzeitprinzip arbeitenden Füllstandsmessgerät (5), welches auf dem Behälter (3) angeordnet ist, bei dem
- mittels einer Sende- und Empfangseinheit (11) Sendesignale (S) in den Behälter (3) gesendet und deren an Reflektoren im Behälter zur Sende- und Empfangseinheit (11) zurück reflektierten Anteile nach einer von deren auf diesem Weg zurückgelegten Wegstrecke abhängigen Laufzeit als Empfangssignale (R) empfangen werden,
- anhand der Empfangssignale (R) Echofunktionen (A(t)) abgeleitet werden,
- - die die Amplituden (A) der Empfangssignale (R) als Funktion einer der zugehörigen Laufzeit entsprechenden Position (t) wiedergeben,
- in den Echofunktionen (A(t)) jeweils enthaltene anhand vorgegebener Echoerkennungsverfahren identifizierbare Nutzechos (E) vorgegebener Nutzechotypen ermittelt werden, wobei jedes Nutzecho (E) ein lokales Maximum der Echofunktion (A(t)) ist, dass auf eine Reflektion an einem seinem Nutzechotyp zugeordneten Reflektor, insb. einer Füllgutoberfläche (15), einem Behälterboden (17) oder einem im Behälter (3) befindlichen Störer (9), zurückzuführen ist,
- für jedes Nutzecho (E) dessen Echoqualität (Q_{E}) bestimmt wird, wobei die Echoqualität (Q_{E}) umso höher ist, je peakförmiger die Echofunktion (A(t)) im Bereich des jeweiligen Nutzechos (E) ausgebildet ist, und je isolierter von anderen lokalen Maxima das jeweilige Nutzecho (E) in der Echofunktion (A(t)) auftritt, wobei die Echoqualitäten (Q_{E}) der Nutzechos (E) anhand einer unter der Echofunktion (A(t)) in einem das Maximum des jeweiligen Nutzechos (E) umgebenden Fenster (F) vorgegebener Positionsbreite (Δt) und Amplitudenhöhe (ΔA) eingeschlossenen Fläche bestimmt wird, wobei der Fenstermittelpunkt mit dem durch die maximale Amplitude (A_{M}) und die zugehörige Echoposition (t_{E}) des Nutzechos (E) definierten Punkt der Echofunktion (A(t)) zusammenfällt, und wobei die Positionsbreite (Δt) des Fensters (F) in Abhängigkeit von der Position (t_{E}) der Fenstermitte vorgegeben wird, und
- der Füllstand (L) unter Berücksichtigung der Echoqualitäten (Q_{E}) der Nutzechos (E) bestimmt wird.

2. Verfahren nach Anspruch 1, bei dem
der Füllstand (L) ausschließlich anhand von Nutzechos (E) bestimmt wird, deren Echoqualität (Q_{E}) ein vorgegebenes Mindestmaß überschreitet.

3. Verfahren nach Anspruch 1, bei dem
- anhand der Echoqualitäten (Q_{E}) der Nutzechos (E) diejenigen Nutzechos (E) bestimmt werden, aus denen aufgrund ihrer Echoqualität (E) zuverlässige Informationen abgeleitet werden können, und
- zur Bestimmung des Füllstands (L) ausschließlich zuverlässige Informationen herangezogen werden.

4. Verfahren nach Anspruch 1, bei dem
immer dann, wenn anhand der in einer der Echofunktionen (A(t)) identifizierten Nutzechos (E) unterschiedliche Verfahren zur Füllstandsbestimmung ausführbar sind, anhand der Echoqualitäten (Q_{E}) dieser Nutzechos (E) dasjenige Verfahren ausgewählt und angewendet wird, bei dem die dafür benötigten Nutzechos (E) die höchsten Echoqualitäten (Q_{E}) aufweisen.

5. Verfahren nach Anspruch 1, bei dem die Echoqualitäten (Q_{E})
der Nutzechos (E) zusätzlich anhand
- einer Breite (B) des Nutzechos (E), insb. einer Breite (B), die gleich einer Differenz zwischen denjenigen beiden Positionen (t+, t⁻ ) ist, bei denen die Amplitude (A) der Echofunktion (A(t)) ausgehend von der Echoposition (t_{E}) des Maximums des Nutzechos (E) zu beiden Seiten auf einen vorgegebenen Wert (A_{W}), insb. einen in Abhängigkeit von der maximalen Amplitude (A_{M}) des vorgegebenen Wert (A_{W}), abgesunken ist,
- von Abständen der Echoposition (t_{E}) des jeweiligen Nutzechos (E) zu den Positionen von dazu unmittelbar benachbarten lokalen Maxima der Echofunktion (A(t)),
- einer Amplitude (A_{M}) des Maximums des jeweiligen Nutzechos (E) im Verhältnis zu dessen Breite (B),
- der Verhältnisse der Amplitude (A_{M}) des Maximums des jeweiligen Nutzechos (E) zu den Amplituden der dazu unmittelbar benachbarten lokalen Maxima der Echofunktion (A(t)), und/oder
- der Verhältnisse der Amplitude (A_{M}) des Maximums des jeweiligen Nutzechos (E) zu den Amplituden unmittelbar dazu benachbarter lokaler Minima der Echofunktion (A(t)) bestimmt wird.

6. Verfahren nach Anspruch 5, bei dem für Nutzechos (E) unterschiedlichen Nutzechotyps unterschiedliche Qualitätskriterien zur Bestimmung von deren Echoqualität (Q_{E}) angewendet werden.

7. Verfahren nach Anspruch 1, bei dem
- eine zeitliche Entwicklung der Echoposition (t_{E}) von Nutzechos (E) mindestens eines Nutzechotyps aufgezeichnet wird, indem
-- in nacheinander aufgezeichneten Echofunktionen (A(t)) die Echopositionen (t_{E}) derjenigen Nutzechos (E) dieses Nutzechotyps bestimmt werden, die ein Mindestmaß an Echoqualität (Q_{E}) aufweisen, und
-- die Echopositionen (t_{E}) dieser Nutzechos (E) jeweils zusammen mit dem Zeitpunkt der Aufzeichnung der zugehörigen Echofunktion (A(t)) aufgezeichnet werden,
- anhand der zeitlichen Entwicklung der Echoposition (t_{E}) der Nutzechos (E) dieses Nutzechotyps eine in der aktuellen Echofunktion (A(t)) zu erwartende Echoposition (T_{E}) des Nutzechos (E) dieses Nutzechotyps extrapoliert wird, und
- diese extrapolierte Echoposition (T_{E}), insb.
-- als Ersatz für die Echoposition (t_{E}) des jeweiligen Nutzechos (E) in der aktuellen Echofunktion (A(t)),
-- zur Identifizierung des Nutzechos (E) des jeweiligen Nutzechotyps in der aktuellen Echofunktion (A(t)) und/oder
-- zur Füllstandsbestimmung,
zur Verfügung gestellt wird.

8. Verfahren nach Anspruch 7, bei dem
- anhand der Echoqualitäten (Q_{E}) der zur Echoverfolgung eines bestimmten Nutzechotyps verwendeten Nutzechos (E), der zeitlichen Abstände zwischen deren Aufzeichnung und einer im Behälter (3) maximal auftretenden Füllstandsänderungsgeschwindigkeit eine Genauigkeit der jeweiligen mittels Echoverfolgung extrapolierten Echoposition (T_{E}) abgeschätzt wird, und
- die mittels Echoverfolgung extrapolierten Echopositionen (T_{E}) unter Berücksichtigung von deren Genauigkeit verwendet werden.

9. Verfahren nach Anspruch 1, bei dem
- zur Füllstandsbestimmung ein hinsichtlich der damit erzielbaren Genauigkeit der Füllstandsbestimmung hochrangiges Grundverfahren, insb. ein Grundverfahren bei dem der Füllstand (L) anhand der Echoposition (t_{L}) des Füllstandsechos (E_{L}) bestimmt wird, verwendet wird, und
- das Grundverfahren bedarfsabhängig durch ein Zusatzverfahren ergänzt wird, mit dem im Grundverfahren benötigte Informationen, insb. Informationen, die aufgrund von in der Echofunktion A(t) nicht identifizierbaren Nutzechos (E) nicht unmittelbar zur Verfügung stehen oder aufgrund der schlechten Echoqualität (Q_{E}) des Nutzechos (E), aus dem sie ableitbar wären, nicht verwendet werden sollten, bestimmt werden.

10. Verfahren nach Anspruch 9, bei dem
- das Grundverfahren ein Verfahren ist, bei dem der Füllstand (L) anhand der Echoposition (t_{L}) des Füllstandsechos (E_{L}) bestimmt wird,
- zur Ermittlung der Echoposition (t_{L}) des Füllstandsechos (E_{L}) mindestens ein Zusatzverfahren zur Verfügung steht, und
- nur dann eines der zur Verfügung stehenden Zusatzverfahren ausgeführt wird, wenn die hierfür benötigten Nutzechos (E) in der Echofunktion (A(t)) identifiziert werden konnten und eine Mindestqualität aufweisen.

11. Verfahren nach Anspruch 10, bei dem
ein zur Verfügung stehendes Zusatzverfahren
- einen ersten Verfahrensschritt umfasst, in dem ein Echopositionsbereich (Δt_{L}) bestimmt wird, in dem das Füllstandsecho (E_{L}) in der aktuellen Echofunktion (A(t)) zu erwarten ist, und
- einen zweiten Verfahrensschritt umfasst, in dem ein Echoerkennungsverfahren zur Identifizierung des Füllstandsechos (E_{L}) in diesem Echopositionsbereich (Δt_{L}) der aktuellen Echofunktion (A(t)) ausgeführt wird.

12. Verfahren nach Anspruch 11, bei dem
der Echopositionsbereich (Δt_{L}) im ersten Verfahrensschritt
- anhand der Echoposition (t_{ST}) des Störechos (E_{ST}),
- anhand der Echoposition (t_{B}) des Behälterbodenechos (E_{B}), oder
- anhand einer aus den Echopositionen (t_{L}) der Füllstandsechos (E_{L}) zuvor aufgezeichneter Echofunktionen (A(t)) abgeleiteten zeitlichen Entwicklung der Echoposition (t_{L}) der Füllstandsechos (E_{L}) abgeleitet wird.

13. Verfahren nach Anspruch 1, bei dem
die Echoqualitäten (Q_{E}) der Nutzechos (E) bei einer Überprüfung und/oder einer Plausibilitätskontrolle eines End- oder Zwischenergebnisses der Füllstandsbestimmung berücksichtigt werden.

## Claims

1. Procedure for measuring a level (L) of a medium (1) in a vessel (3), with a level transmitter (5) that works according to the transit time principle and is arranged on the vessel (3), wherein with said procedure
- transmission signals (S) are sent into the vessel (3) by means of a transmission and reception unit (11) and their parts reflected back at reflectors in the vessel to the transmission and reception unit (11) are received as reception signals (R) after a transit time that depends on the distance covered in this way,
- wherein using the reception signals (R) echo functions (A(t)) are derived,
-- which return the amplitudes (A) of the reception signals (R) as a function of a position (t) corresponding to the associated transit time,
- wherein useful echoes (E) of predefined useful echo types that are contained in the echo functions (A(t)) and can be identified using predefined echo detection procedures are determined, wherein each useful echo (E) is a local maximum of the echo function (A(t)), which is due to a reflection at a reflector assigned to its useful echo type, particularly a medium surface (15), a vessel floor (17) or a disturbance (9) located in the vessel (3),
- wherein the echo quality (Q_{E}) is determined for each useful echo (E), wherein the echo quality (Q_{E}) is higher the more peak-shaped the echo function (A(t)) is in the area of the useful echo (E), and the more isolated the useful echo (E) occurs in the echo function (A(t)) in relation to the other local maxima, wherein the echo qualities (Q_{E}) of the useful echoes (E) is determined using a surface enclosed under the echo function (A(t)) in a window (F) of a predefined position width (Δt) and amplitude height (ΔA) surrounding the maximum of the respective useful echo (E), wherein the center of the window coincides with the point of the echo function (A(t)) defined by the maximum amplitude (A_{M}) and the associated echo position (t_{E}) of the useful echo (E), and wherein the position width (Δt) of the window (F) is specified depending on the position (t_{E}) of the window center, and
- the level (L) is determined taking into account the echo qualities (Q_{E}) of the useful echoes (E).

2. Procedure as claimed in Claim 1, wherein
the level (L) is determined exclusively using the useful echoes (E) whose echo quality (Q_{E}) exceeds a predefined minimum value.

3. Procedure as claimed in Claim 1, wherein
- the useful echoes (E) from which reliable information can be derived due to their echo quality (E) are determined using the echo qualities (Q_{E}) of the useful echoes (E), and
- only reliable information is used to determine the level (L).

4. Procedure as claimed in Claim 1, wherein
every time that different procedures to determine the level can be executed using the useful echoes (E) identified in one of the echo functions (A(t)), the procedure that is selected and applied using the echo qualities (Q_{E}) of these useful echoes (E) is the procedure in which the necessary useful echoes (E) have the highest echo qualities (Q_{E}).

5. Procedure as claimed in Claim 1, wherein the echo qualities (Q_{E}) of the useful echoes (E) are also determined on the basis of
- a width (B) of the useful echo (E), particularly a width (B) that is equal to a difference between the two positions (t+, t⁻) at which the amplitude (A) of the echo function (A(t)) has dropped, starting from the echo position (t_{E}) of the maximum of the useful echo (E), on both sides, to a predefined value (Aw), particularly a value that depends on the maximum amplitude (A_{M}) of the predefined value (Aw),
- distances between the echo position (t_{E}) of the useful echo (E) and the positions of local maxima of the echo function (A(t)) that are immediately adjacent to it,
- an amplitude (A_{M}) of the maximum of the useful echo (E) in relation to its width (B),
- the ratios of the amplitude (A_{M}) of the maximum of the useful echo (E) to the amplitudes of the local maxima of the echo function (A(t)) that are immediately adjacent to it, and/or
- the ratios of the amplitude (A_{M}) of the maximum of the useful echo (E) to the amplitudes of the local minima of the echo function (A(t)) that are immediately adjacent to it.

6. Procedure as claimed in Claim 5, wherein different quality criteria are applied for useful echoes (E) of different useful echo types to determine their echo quality (Q_{E}).

7. Procedure as claimed in Claim 1, wherein
- a development over time of the echo position (t_{E}) of useful echoes (E) of at least one useful echo type is recorded, in that
-- in echo functions (A(t)) that are recorded consecutively, the procedure determines the echo positions (t_{E}) of the useful echoes (E) of the useful echo type that have a minimum echo quality (Q_{E}), and
-- the echo positions (t_{E}) of these useful echoes (E) are recorded together with the time of the recording of the corresponding echo function (A(t)),
- an echo position (T_{E}) of the useful echo (E) of this useful echo type, which can be expected in the current echo function (A(t)), is extrapolated using the development, over time, of the echo position (t_{E}) of the useful echoes (E) of this useful echo type, and
- this extrapolated echo position (T_{E}) is provided, particularly
-- as a replacement for the echo position (t_{E}) of the useful echo (E) in the current echo function (A(t)),
-- to identify the useful echo (E) of the useful echo type in the current echo function (A(t)) and/or
-- to determine the level.

8. Procedure as claimed in Claim 7, wherein
- an accuracy of the echo position (T_{E}) extrapolated using echo tracing is estimated using the echo qualities (Q_{E}) of the useful echoes (E) used to track the echo of a certain useful echo type, the time differences between the recording and a maximum level change speed occurring in the vessel (3), and
- the echo positions (T_{E}) extrapolated using echo tracing are used taking their accuracy into account.

9. Procedure as claimed in Claim 1, wherein
- a basic procedure which is of high-quality with regard to the accuracy of level determination that can be achieved with the procedure, particularly a basic procedure where the level (L) is determined using the echo position (t_{L}) of the level echo (E_{L}), is used to determine the level, and
- where necessary, the basic procedure is complemented by a supplementary procedure with which information required in the basic procedure is determined, particularly information that is not immediately available due to useful echoes (E) that cannot be identified in the echo function A(t) or should not be used due to the poor echo quality (Q_{E}) of the useful echo (E) from which they could be derived.

10. Procedure as claimed in Claim 9, wherein
- the basic procedure is a procedure in which the level (L) is determined using the echo position (t_{L}) of the level echo (E_{L}),
- at least one supplementary procedure is available to determine the echo position (t_{L}) of the level echo (E_{L}), and
- one of the supplementary procedures available is executed only if the useful echoes (E) that are necessary for this could be identified in the echo function (A(t)) and or of a minimum quality.

11. Procedure as claimed in Claim 10, wherein
a supplementary procedure available
- comprises a first procedural step in which the procedure determines an echo position range (Δt_{L}) in which the level echo (E_{L}) can be expected in the current echo function (A(t)), and
- comprises a second procedural step in which an echo detection procedure is executed to identify the level echo (E_{L}) in this echo position range (Δt_{L}) of the current echo function (A(t)).

12. Procedure as claimed in Claim 11, wherein
the echo position range (Δt_{L}) is derived in the first procedural step
- using the echo position (t_{ST}) of the interference echo (E_{ST}),
- using the echo position (t_{B}) of the vessel floor echo (E_{B}), or
- using a development over time of the echo position (t_{L}) of the level echoes (E_{L}), which has been derived from the echo positions (t_{L}) of the level echoes (E_{L}) of echo functions (A(t)) recorded beforehand.

13. Procedure as claimed in Claim 1, wherein
the echo qualities (Q_{E}) of the useful echoes (E) are taken into consideration when verifying and/or performing a plausibility check on a final result or an intermediate result of the determination of the level.

## Revendications

1. Procédé destiné à la mesure d'un niveau (L) d'un produit (1) se trouvant dans un réservoir (3), avec un transmetteur de niveau (5) fonctionnant selon le principe du temps de propagation, lequel transmetteur est disposé sur le réservoir (3), procédé pour lequel
- des signaux d'émission (S) sont envoyés dans le réservoir (3) au moyen d'une unité d'émission et de réception (11) et leurs parties réfléchies sur des réflecteurs dans le réservoir vers l'unité d'émission et de réception (11) sont reçues comme signaux de réception (R) après un temps de propagation dépendant de la distance parcourue sur ce trajet,
- à l'aide des signaux de réception (R), on déduit des fonctions d'écho (A(t)),
-- lesquelles fonctions reproduisent les amplitudes (A) des signaux de réception (R) en fonction d'une position (t) correspondant au temps de propagation associé,
- on détermine dans les fonctions d'écho (A(t)) des échos utiles (E) de types d'échos utiles prédéfinis, respectivement contenus et identifiables à l'aide de procédés de reconnaissance d'écho prédéfinis, chaque écho utile (E) étant un maximum local de la fonction d'écho (A(t)), lequel maximum est dû à une réflexion sur un réflecteur associé à son type d'écho utile, notamment une surface de produit (15), un fond de réservoir (17) ou un perturbateur (9) se trouvant dans le réservoir (3),
- pour chaque écho utile (E), on détermine sa qualité d'écho (Q_{E}), la qualité d'écho (Q_{E}) étant d'autant plus élevée que la fonction d'écho (A(t)) est réalisée sous forme de pic dans la zone de l'écho utile (E) respectif, et que l'écho utile (E) respectif se produit de manière isolée par rapport à d'autres maxima locaux dans la fonction d'écho (A(t)), les qualités d'écho (Q_{E}) des échos utiles (E) étant déterminées à l'aide d'une surface incluse sous la fonction d'écho (A(t)) dans une fenêtre (F) de largeur de position (Δt) et de hauteur d'amplitude (ΔA) prédéterminées entourant le maximum de l'écho utile (E) respectif, le centre de la fenêtre coïncidant avec le point de la fonction d'écho (A(t)) défini par l'amplitude maximale (A_{M}) et la position d'écho correspondante (t_{E}) de l'écho utile (E), et la largeur de position (Δt) de la fenêtre (F) étant prédéfinie en fonction de la position (t_{E}) du centre de la fenêtre, et
- le niveau (L) est déterminé en tenant compte des qualités d'écho (Q_{E}) des échos utiles (E).

2. Procédé selon la revendication 1, pour lequel
le niveau (L) est déterminé exclusivement à l'aide d'échos utiles (E) dont la qualité d'écho (Q_{E}) dépasse une valeur minimale prédéfinie.

3. Procédé selon la revendication 1, pour lequel
- à l'aide des qualités d'écho (Q_{E}) des échos utiles (E), on détermine les échos utiles (E) dont on peut déduire des informations fiables en raison de leur qualité d'écho (E), et
- seules des informations fiables sont utilisées pour déterminer le niveau (L).

4. Procédé selon la revendication 1, pour lequel
chaque fois que différents procédés de détermination du niveau peuvent être exécutés à l'aide des échos utiles (E) identifiés dans l'une des fonctions d'écho (A(t)), on sélectionne et on applique, à l'aide des qualités d'écho (Q_{E}) de ces échos utiles (E), le procédé dans lequel les échos utiles (E) nécessaires à cet effet présentent les qualités d'écho (Q_{E}) les plus élevées.

5. Procédé selon la revendication 1, pour lequel les qualités d'écho (Q_{E}) des échos utiles (E) sont déterminées en outre sur la base
- d'une largeur (B) de l'écho utile (E), notamment d'une largeur (B) qui est égale à une différence entre les deux positions (t+, t⁻) pour lesquelles l'amplitude (A) de la fonction d'écho (A(t)) est descendue, à partir de la position d'écho (t_{E}) du maximum de l'écho utile (E), des deux côtés à une valeur (Aw) prédéfinie, notamment une valeur dépendant de l'amplitude maximale (A_{M}) de la valeur (Aw) prédéfinie,
- des distances entre la position d'écho (t_{E}) de l'écho utile (E) respectif et les positions des maxima locaux directement voisins de la fonction d'écho (A(t)),
- d'une amplitude (A_{M}) du maximum de chaque écho utile (E) par rapport à sa largeur (B),
- des rapports de l'amplitude (A_{M}) du maximum de l'écho utile respectif (E) aux amplitudes des maxima locaux de la fonction d'écho (A(t)) qui lui sont directement voisins, et/ou
- des rapports entre l'amplitude (A_{M}) du maximum de l'écho utile respectif (E) et les amplitudes des minima locaux de la fonction d'écho (A(t)) qui lui sont directement voisins.

6. Procédé selon la revendication 5, pour lequel des critères de qualité différents sont appliqués à des échos utiles (E) de différents types d'écho utile pour déterminer leur qualité d'écho (Q_{E}).

7. Procédé selon la revendication 1, pour lequel
- on enregistre une évolution dans le temps de la position d'écho (t_{E}) d'échos utiles (E) d'au moins un type d'écho utile, en ce que
-- on détermine, dans des fonctions d'écho (A(t)) enregistrées successivement, les positions d'écho (t_{E}) des échos utiles (E) de ce type d'écho utile qui présentent un minimum de qualité d'écho (Q_{E}), et
-- les positions d'écho (t_{E}) de ces échos utiles (E) sont enregistrées respectivement en même temps que l'instant d'enregistrement de la fonction d'écho (A(t)) correspondante,
- à l'aide de l'évolution dans le temps de la position d'écho (t_{E}) des échos utiles (E) de ce type d'écho utile, on extrapole une position d'écho (T_{E}) de l'écho utile (E) de ce type d'écho utile à attendre dans la fonction d'écho actuelle (A(t)), et
- cette position d'écho extrapolée (T_{E}) est mise à disposition, notamment
-- en remplacement de la position d'écho (t_{E}) de l'écho utile (E) correspondant dans la fonction d'écho actuelle (A(t)),
-- pour l'identification de l'écho utile (E) du type d'écho utile respectif dans la fonction d'écho actuelle (A(t)) et/ou
-- pour la détermination du niveau.

8. Procédé selon la revendication 7, pour lequel
- une précision de la position d'écho respective (T_{E}) extrapolée au moyen du suivi d'écho est estimée à l'aide des qualités d'écho (Q_{E}) des échos utiles (E) utilisés pour le suivi d'écho d'un certain type d'écho utile, des intervalles de temps entre leur enregistrement et une vitesse de variation de niveau maximale survenant dans le réservoir (3), et
- les positions d'écho (T_{E}) extrapolées au moyen du suivi d'écho sont utilisées en tenant compte de leur précision.

9. Procédé selon la revendication 1, pour lequel
- pour la détermination du niveau, on utilise un procédé de base de haut niveau en ce qui concerne la précision de la détermination du niveau pouvant être ainsi obtenue, notamment un procédé de base pour lequel le niveau (L) est déterminé à l'aide de la position d'écho (t_{L}) de l'écho de niveau (E_{L}), et
- le procédé de base est complété, en fonction des besoins, par un procédé supplémentaire permettant de déterminer des informations nécessaires dans le procédé de base, notamment des informations qui ne sont pas directement disponibles en raison d'échos utiles (E) non identifiables dans la fonction d'écho A(t) ou qui ne devraient pas être utilisées en raison de la mauvaise qualité d'écho (Q_{E}) de l'écho utile (E) à partir duquel elles pourraient être déduites.

10. Procédé selon la revendication 9, pour lequel
- le procédé de base est un procédé dans lequel le niveau (L) est déterminé à l'aide de la position d'écho (t_{L}) de l'écho de niveau (E_{L}),
- au moins un procédé supplémentaire est disponible pour déterminer la position de l'écho (t_{L}) de l'écho de niveau (E_{L}), et
- l'un des procédés supplémentaires disponibles n'est exécuté que si les échos utiles (E) nécessaires à cet effet ont pu être identifiés dans la fonction d'écho (A(t)) et présentent une qualité minimale.

11. Procédé selon la revendication 10, pour lequel
un procédé supplémentaire disponible
- comprend une première étape de procédé dans laquelle une plage de positions d'écho (Δt_{L}) est déterminée, dans laquelle l'écho de niveau (E_{L}) est attendu dans la fonction d'écho actuelle (A(t)), et
- comprend une deuxième étape de procédé dans laquelle un procédé de détection d'écho est exécuté pour l'identification de l'écho de niveau (E_{L}) dans cette plage de positions d'écho (Δt_{L}) de la fonction d'écho actuelle (A(t)).

12. Procédé selon la revendication 11, pour lequel
la plage de positions d'écho (Δt_{L}) est déduite dans la première étape du procédé
- à l'aide de la position d'écho (t_{ST}) de l'écho parasite (E_{ST}),
- à l'aide de la position d'écho (t_{B}) de l'écho de fond de cuve (E_{B}), ou
- à l'aide d'une évolution temporelle de la position d'écho (t_{L}) des échos de niveau (E_{L}), laquelle évolution est déduite des positions d'écho (t_{L}) des fonctions d'écho (A(t)) enregistrées précédemment.

13. Procédé selon la revendication 1, pour lequel
les qualités d'écho (Q_{E}) des échos utiles (E) sont prises en compte lors d'une vérification et/ou d'un contrôle de plausibilité d'un résultat final ou intermédiaire de la détermination du niveau.
